# EUROPÄISCHE PATENTSCHRIFT

(11) **EP 0 514 682 B1**
(45) Veröffentlichungstag und Bekanntmachung des Hinweises auf die Patenterteilung: **26.07.1995**
(21) Anmeldenummer: 92107010.8
(22) Anmeldetag: 24.04.1992
(51) Int. Cl.: B01J 27/053, B01D 53/94

(54) **Metalloxide enthaltender Katalysator für Verfahren zum oxidativen Abbau von organischen Verbindungen aus Abgasen von Verbrennungsanlagen**
Catalyst containing metallic oxides for the oxidation breakdown of organic compounds in the residual gases from incinerator plants
Catalyseur à base d'oxydes métalliques pour la destruction oxydative de composés organiques dans les gaz résiduaires des fours d'incinération

(30) Priorität: 18.05.1991 DE 4116364
(43) Veröffentlichungstag der Anmeldung: 25.11.1992
(73) Patentinhaber: BASF Aktiengesellschaft, 67063 Ludwigshafen (DE)
(72) Erfinder: Hess, Klaus, Dr., W-6702 Bad Duerkheim (DE); Morsbach, Bernd, W-6700 Ludwigshafen (DE); Drews, Ronald, Dr., W-6703 Limburgerhof (DE); Buechele, Wolfgang, Dr., W-6700 Ludwigshafen (DE); Schachner, Helmut, Dr., W-6909 Walldorf (DE)

(56) Entgegenhaltungen:
- EP-A- 0 292 310
- EP-A- 0 319 457
- EP-A- 0 348 768
- WO-A-90/13352
- WO-A-91/04780

## Beschreibung

Vorliegende Erfindung betrifft einen Metalloxide enthaltenden Katalysator für Verfahren zum oxidativen Abbau von organischen Verbindungen, insbesondere von chlorhaltigen organischen Verbindungen, aus Abgasen von Verbrennungsanlagen, Verfahren zur Herstellung des Katalysators und Verfahren zum oxidativen Abbau der genannten organischen Verbindungen.

Verbrennungsabgase enthalten oft noch unverbrannte organische Verbindungen, die aus Gründen der Reduzierung der Umweltbelastung aus den Abgasen entfernt werden müssen.

Die Entfernung solcher organischer Verbindungen aus den Verbrennungsabgasen kann durch thermische Nachverbrennung erfolgen, bei denen das Gas unter Verbrauch von weiterem Brennstoff einer Nachverbrennung unterzogen wird. Diese Verfahren haben jedoch den Nachteil, daß sie durch den Verbrauch von zusätzlichem Brennstoff und durch die hohen Betriebstemperaturen sehr aufwendig sind.

Es ist auch bekannt, organische Verbindungen aus Verbrennungsabgasen durch katalytische Nachverbrennung bei tieferen Temperaturen und ohne Zuführung von zusätzlichem Brennstoff zu entfernen. Hierfür sind vor allem Edelmetallkatalysatoren, die auf Trägern aufgebracht sind, bekannt geworden (DE-OS 26 40 906). Diese Katalysatoren werden vor allem bei der Reinigung von Autoabgasen eingesetzt.

Katalysatoren, die BaSO₄ enthalten können, sind aus der US 4 929 586 und der DE 35 31 871 C2 bekannt. Gemäß US 4 929 586 liegt das BaSO₄ jedoch nur als Überzug und nicht als inniges Gemisch mit den anderen Komponenten vor und der Katalysator gemäß DE 35 31 871 C2 enthält keine Molybdän-, Wolfram- und/oder Chromoxide. Die in den beiden Druckschriften genannten Katalysatoren werden außerdem für einen anderen Zweck, nämlich zur reduktiven Entfernung von Stickoxiden, eingesetzt.

Aus EP-A-292 310 sind Metalloxide enthaltende Katalysatoren für Verfahren zum oxidativen Abbau von organischen Verbindungen aus Abgasen von Verbrennungsanlagen, enthaltend Oxide des Titans, des Vanadiums, des Molybdäns und MnSO₄.H₂O oder MgSO₄.H₂O in einer Menge von 5, 10, 15 und 20 Gew.-%, bezogen auf das Gesamtgewicht des Katalysators, bekannt, wobei zumindest die Komponenten a) und d) in Form eines innigen Gemisches im Katalysator vorliegen.

Aus WO-A-91/04780 ist ein Verfahren zum oxidativen Abbau von organischen Verbindungen aus Abgasen von Verbrennungsanlagen durch Umsetzung mit Sauerstoff in Gegenwart eines Katalysators bekannt, wobei ein Katalysator eingesetzt wird, der Oxide des Titans, des Vanadiums und des Molybdäns und/oder Wolframs enthält, wobei der Katalysator keine Sulfate der Erdalkalimetalle enthält.

In der DE 38 04 722 A1 wird ein Verfahren zur oxidativen katalytischen Nachverbrennung beschrieben, bei dem anstelle von Edelmetallkatalysatoren Mischoxidkatalysatoren eingesetzt werden, die neben Titandioxid mindestens ein Oxid der übergangsmetalle Vanadium, Chrom, Mangan, Eisen, Kobalt, Nickel, Kupfer, Zink, Zirkon, Molybdän, Wolfram, Platin und Rhodium enthalten.

Ein ähnlicher Katalysator, der zur Reinigung von Abgasen von organischen Chlorverbindungen eingesetzt wird, ist in Chemical Abstracts 112 (26), 239 884j (Referat der JP-OS 02-035 914) beschrieben.

Als besonders problematische chlorierte organische Verbindungen sind die polychlorierten Dibenzodioxine und Dibenzofurane bekannt. Der Abbau dieser Verbindungen unter Erhitzen in Gegenwart eines Katalysators wird in der EP 0 252 521 A1 beschrieben, wobei als Katalysatoren allgemein "Asche" oder eine Reihe von Metallen bzw. deren Oxide, Carbonate oder Silikate genannt werden. Für den oxidativen Abbau in Gegenwart von Luft sind als Katalysatoren beispielhaft nur Kupfer-Chromoxid auf SiO₂ und NiO belegt.

Es hat sich gezeigt, daß durch die bekannten Metalloxid-, insbesondere TiO₂-haltigen Katalysatoren organische Verbindung aus Abgasen von Verbrennungsanlagen, insbesondere chlorierte organische Verbindungen und hier ganz besonders die genannten Dioxine, nur in ungenügendem Maße abgebaut werden.

Der vorliegenden Erfindung lag daher die Aufgabe zugrunde, ein Verfahren und einen in diesem Verfahren einsetzbaren Katalysator zur Verfügung zu stellen, womit organische, insbesondere chlorierte organische Verbindungen aus Abgasen von Verbrennungsanlagen möglichst vollständig oxidativ abgebaut werden.

Es wurde nun gefunden, daß diese Aufgabe durch ein Verfahren gelöst wird, in dem ein Metalloxide enthaltender Katalysator eingesetzt wird, der folgende Komponenten enthält:
a) Oxide des Titans und/oder Zirkons
b) Oxide des Vanadiums und/oder Niobs
c) Oxide des Molybdäns, Wolframs und/oder Chroms
d) Sulfate der Erdalkalimetalle Calcium, Strontium oder Barium in einer Menge von 5 bis 40 Gew.-%, bezogen auf das Gesamtgewicht des Katalysators,
wobei zumindest die Komponenten a) und d) in Form eines innigen Gemishes im Katalysator vorliegen.

Überraschenderweise gelingt es, durch den Zusatz von Erdalkalisulfaten einen Katalysator zur Verfügung zu stellen, der bezüglich der Abbauraten deutlich bessere Ergebnisse zeigt als Katalysatoren, die nur aus den bekannten Metalloxiden aufgebaut sind. Diese merkliche Reduzierung der emittierten organischen Verbindungen ist insbesondere bei den Dioxinen von großer Bedeutung.

Als günstig hat es sich erwiesen, wenn der Katalysator zusätzlich als Komponente e) Pd, Pt, Ru, Rh, Ir und/oder Os in metallischer Form oder als Oxide enthält, und zwar in einer Menge von 0,01 bis 3 Gew.-%, bezogen auf das Gesamtgewicht des Katalysators, vorzugsweise als einen auf die Katalysatoroberfläche aufgebrachten Überzug. Mit dieser zusätzlichen Komponente können die Abbauraten noch weiter gesteigert werden.

Bevorzugt enthält der Katalysator folgende Komponenten: Titandioxid, insbesondere in der Anatasform, Vanadiumoxid als V₂O₅, Wolframoxid als WO₃, Bariumsulfat und gegebenenfalls Platin oder Palladium.

Die Erdalkalisulfate sind in dem Katalysator in einer Menge von 5 bis 40 Gew.-%, bevorzugt 8 bis 34 Gew.-% und insbesondere 10 bis 30 Gew.-% enthalten.

Die Komponente b) macht üblicherweise einen Anteil von 0,5 bis 8 Gew.-%, bevorzugt 2 bis 5 Gew.-%, berechnet jeweils als Pentoxid, die Komponente c) einen Anteil von 5 bis 15 Gew.-%, bevorzugt 8 bis 12 Gew.-%, berechnet jeweils als Trioxid, aus, jeweils bezogen auf das Gesamtgewicht des Katalysators.

Neben den bereits genannten Komponenten kann der erfindungsgemäße Katalysator noch zusätzlich Zink in Form von Oxiden und Sulfaten aufweisen, insbesondere dann, wenn es sich bei den Abgasen um arsenhaltige Abgase handelt. Die Verwendung von Zinkverbindungen in Katalysatoren für Verfahren zur Entfernung von Stickoxiden aus arsenhaltigen Verbrennungsabgasen wird in der DE-OS 38 21 480 beschrieben.

Die Menge der Zinkverbindung wird so bemessen, daß sich ein Atomverhältnis der Komponente a) zur Zinkverbindung von 1 zu 0,009 bis 0,028 ergibt. Hauptsächlich liegen die Zinkverbindungen als Zinkoxid vor, sie können aber auch in Form einer gegenüber den Arbeitstemperaturen des Katalysators stabilen Zinkverbindung, z.B. als Zinksulfat, vorliegen.

Außerdem enthält der Katalysator noch an sich bekannte Verarbeitungshilfsmittel, soweit diese sich nicht beim Calcinieren zersetzen.

Die zur Vervollständigung der 100 Gew.-% erforderliche Menge wird jeweils von der Komponente a) gebildet.

Die erfindungsgemäßen Katalysatoren können auf verschiedene Weisen hergestellt werden. Dabei muß aber immer gewährleistet sein, daß zumindest die Komponenten a) und d) als inniges Gemisch im Katalysator vorliegen. An sich bekannte Herstellungsverfahren für Metalloxide enthaltende Katalysatoren sind in der DE 39 06 136 C1, Seite 2, angegeben.

Eine mögliche Ausführungsform besteht darin, daß man ein Gemenge aus Erdalkalisulfat, Titanoxiden, Wolframoxiden und/oder Molybdänoxiden und einer Verbindung des Vanadiums wie Ammoniummetavanadat, Vanadiumoxalat oder Vanadiumoxid innig vermischt und die in der DE 39 06 136 C1 genannten Verarbeitungshilfsmittel hinzugibt.

Während des Mischprozesses kann gegebenenfalls eine Lösung einer Zinkverbindung zugesetzt werden.

Das plastifizierte Material kann zu verschiedenen geometrischen Formkörpern weiterverarbeitet werden. An die Formgebung schließt sich eine Trocknung bei 50°C bis 150°C, insbesondere 60°C bis 130°C, und eine Calcination bei 350°C bis 750°C, insbesondere 450°C bis 650°C, an.

Das für die erfindungsgemäßen Katalysatoren verwendete Titanoxid wird bevorzugt aus Metatitansäure hergestellt und das Wolframoxid bevorzugt aus Ammoniumparawolframat.

Es ist aber auch möglich, von homogenen Lösungen der Komponenten a), b) und c) auszugehen, Erdalkalimetallsulfate zuzugeben, die erhaltene Mischung einzudampfen, zu trocknen und durch Calcinieren bei den oben genannten Temperaturen in das Oxid-Sulfat-Gemisch zu überführen. Aus den genannten Lösungen können aber auch die Komponenten durch Fällung ausgeschieden werden, wobei diese Fällungen durch Hydrolyse in die Oxide übergeführt werden.

Wird der Katalysator so hergestellt, daß man zumindest eine der Komponenten b) und c) in Form eines Sols auf den vorher hergestellten Formkörper aufbringt, dann geht man so vor, daß man auf dem vorgeformten Träger, der also bereits die endgültige Form des herzustellenden Katalysators aufweist, zumindest eine der aktiven Komponenten in Form eines Sols durch Tränken aufbringt. Der Träger kann z.B. die Form von Waben, Platten, Pellets oder Strängen haben. Enthält der herzustellende Katalysatorformkörper mehr als eine katalytisch aktive Komponente, so ist es nicht erforderlich, sämtliche aktiven Komponenten mittels der erfindungsgemäßen Soltränkung aufzubringen, sondern es genügt, zumindest eine der genannten Komponenten nach dem Soltränkungsverfahren aufzubringen. So kann beispielsweise das Trägermaterial vor der Verformung bereits die anderen Komponenten, beispielsweise in Form ihrer Oxide, enthalten oder es kann der bereits verformte Träger in üblicher Weise mit Lösungen von Verbindungen der anderen katalytisch aktiven Metalle getränkt worden sein. Anschließend wird er calciniert und dann die restliche(n) Komponente(n) durch Soltränkung aufgebracht. Bevorzugt werden die Verbindungen des Vanadiums für die erfindungsgemäße Soltränkung eingesetzt.

Die Herstellung der für die Tränkung eingesetzten Sole des Vanadiums, Wolframs und/oder Molybdäns erfolgt nach den bekannten Methoden. Als Vanadium-Sole werden insbesondere V₂O₅-Sole eingesetzt, wie sie z.B. beim Behandeln von Ammoniumvanadaten oder Alkalivanadaten mit Säuren entstehen (vgl. Gmelins Handbuch der Anorganischen Chemie, 8. Auflage Vanadium, Teil B, Lieferung 1, System Nr. 48, Seiten 98 bis 101).

Im Falle des Molybdäns werden insbesondere Molybdänsäuresole eingesetzt, die in analoger Weise wie die V₂O₅-Sole durch Säurebehandlung von Alkalimetall-Molybdaten und Dialyse der entstehenden sauren Lösung hergestellt werden (vgl. Gmelins Handbuch der Anorganischen Chemie, 8. Auflage, 1935, Molybdän, System Nr. 53, Seiten 111-112). Als wolframhaltige Sole kommen insbesondere Sole der Wolframsäure in Betracht, die ebenfalls durch Behandeln von Alkaliwolframaten mit Mineralsäuren hergestellt werden können (vgl. Gmelins Handbuch der Anorganischen Chemie, 8. Auflage, 1933, Wolfram, System Nr. 54, Seite 128).

Nach der Tränkung des Trägerkörpers mit dem Sol wird dieser bei Temperaturen von 80°C bis 130°C getrocknet und anschließend bei Temperaturen von 400°C bis 600°C calciniert.

Das genannte Soltränkungsverfahren ist näher beschrieben in der älteren deutschen Anmeldung P 40 25 587.5; die dort offenbarten Katalysatoren werden allerdings für einen anderen Zweck eingesetzt und enthalten auch keine Erdalkalimetallsulfate.

In entsprechender Weise wird die zusätzliche Komponente e) den anderen Katalysatorbestandteilen zugegeben. Dabei ist es bevorzugt, diese Komponente durch ein Tränkungsverfahren auf den vorher hergestellten Katalysatorformkörper aufzubringen, so daß diese Komponente nach dem Trocknen als Überzug oder Schicht, die Teile der Katalysatoroberfläche bedeckt, vorliegt.

Die so erhaltenen Katalysatoren werden in den Abgasstrom von Verbrennungsanlagen eingebaut. Dies erfolgt in an sich bekannter Weise und ist zum Beispiel in der DE 38 04 722 A1 beschrieben.

Die Katalysatoren lassen sich in beliebiger Form einsetzen, z.B. als Strangpreßlinge, Tabletten, vorzugsweise aber in Form von Wabenkörpern mit durchgehend parallel zueinander verlaufenden Kanälen.

Bei den oxidativ abzubauenden organischen Verbindungen handelt es sich zum einen neben C0 um niedermolekulare, gesättigte oder ungesättigte C₁- bis C₁₀-Kohlenwasserstoffe, wie z.B. Butan, Pentan, Hexan, Heptan und Propen. Aber auch andere organische Verbindungen können mit dem erfindungsgemäßen Katalysator aus dem Abgas beseitigt werden. Eine beispielhafte Aufzählung derartiger Verbindungen findet sich in der DE 38 04 722 A1, Spalte 5.

Zum anderen werden mittels des erfindungsgemäßen Katalysators aber auch chlorhaltige Verbindungen wie polychlorierte Biphenyle und insbesondere polychlorierte Dibenzodioxine und polychlorierte Dibenzofurane abgebaut.

Bei den Verbrennungsanlagen handelt es sich insbesondere um Müllverbrennungsanlagen, Rückstandsverbrennungsanlagen und Prozeßöfen.

Das oxidative Abbauverfahren in Gegenwart des Katalysators wird bei Temperaturen von 150°C bis 600°C, vorzugsweise bei 250°C bis 400°C durchgeführt. Die Raumgeschwindigkeiten betragen 1000 bis 150 000 Nm³/m³Kat.x h, insbesondere 2000 bis 100 000 Nm³/m³Kat.x h.

### Herstellung der Katalysatoren

### Beispiele 1 und 2:

Ein TiO₂/WO₃-Pulvergemisch wird mit der entsprechenden Menge Bariumsulfat trocken vermischt. Zu 625 kg dieses Pulvers gibt man 430 l Wasser, 58 l 25 %ige wäßrige Ammoniaklösung und eine Lösung von 10,5 kg Ammoniummetavanadat in 9 kg Monoethanolamin und 30 l Wasser. Man stellt einen pH-Wert von über 9,5 ein und knetet bei 70°C, bis die Feuchtigkeit zwischen 24 und 27 % liegt.

Nach Zugabe von weiteren 152 l Wasser, 9,4 kg SiO₂, 20 kg Ton, 33 kg Glasfasern (1,5 mm), 10 kg Polyethylenoxid, 6,5 kg Carboxymethylcellulose und 6,5 kg Milchsäure knetet man weiter bei 70°C, bis die Feuchtigkeit zwischen 27 und 30 % liegt. Der pH-Wert liegt über 7,0.

Nach Abkühlen auf Raumtemperatur gibt man 16 l 25 %ige wäßrige Ammoniaklösung, 20 l Wasser und 20 kg Glasfasern (3 mm) hinzu und knetet, bis die Plastizität (Fließgrenze im Kugel-Rheometer) etwa 21 kg/cm² beträgt, wobei man die Knetleistung durch Zugabe von Wasser auf einem konstanten Wert hält. Die Feuchtigkeit beträgt nun 27 bis 29 %, der pH-Wert liegt über 8,3.

Die so erhaltene Masse wird bei einem Preßdruck von ca. 20 bar zu Wabenkörpern extrudiert. Diese werden bei 110°C getrocknet und 6 h bei 600°C calciniert.

### Beispiele 3 und 4:

Die Katalysatoren werden analog wie für die Beispiele 1 und 2 beschrieben hergestellt. Nach der Calcinierung tränkt man mit einer Pt(NO₃)₂-Lösung und trocknet erneut bei 110°C.

### Beispiele 5 und 6:

Die Katalysatoren werden wie für Beispiel 4 beschrieben hergestellt, wobei jedoch anstelle von Pt(NO₃)₂-Lösung eine Pd(NO₃)₂-Lösung zum Tränken verwendet wird.

### Vergleichsbeispiele 1 und 2:

Die Katalysatoren werden wie für die Beispiele 1 und 2 beschrieben hergestellt, ohne daß jedoch Bariumsulfat zugesetzt wurde.

Die Gehalte der Katalysatoren an BaSO₄, V₂O₅, WO₃, Pt und Pd können der Tabelle 1 entnommen werden.

**Tabelle 1**

| | BaSO₄ (Gew.-%) | WO₃ (Gew.-%) | V₂O₅ (Gew.-%) | Pt (Gew.-%) | Pd (Gew.-%) |
|---|---|---|---|---|---|
| Beispiel 1 | 10 | 10 | 1,2 | - | - |
| Beispiel 2 | 30 | 10 | 1,2 | - | - |
| Beispiel 3 | 30 | 10 | 1,2 | 0,1 | - |
| Beispiel 4 | 30 | 10 | 3,0 | 0,1 | - |
| Beispiel 5 | 30 | 10 | 3,0 | - | 0,05 |
| Beispiel 6 | 30 | 10 | 3,0 | - | 0,1 |
| Vergleichsbeispiel 1 | - | 9 | 1,2 | - | - |
| Vergleichsbeispiel 2 | - | 9 | 3,0 | - | - |

Die erfindungsgemäßen Katalysatoren 1 bis 6 und die Vergleichskatalysatoren 1 und 2 wurden zum Test in den Abgasstrom einer Müllverbrennungsanlage eingebaut. Vor und nach Katalysator wurde jeweils der Gehalt an Dioxinen, angegeben in ng Toxische Äquivalente (TE)/m³, bestimmt.

Die Ergebnisse sind in Tabelle 2 zusammengestellt.

**Tabelle 2**

| | Temperatur (°C) | Raumgeschwindigkeit (Nm³/m³ Kat.xh) | Dioxingehalt (ng TE/m³) | |
|---|---|---|---|---|
| | | | Eingang | Ausgang |
| Beispiel 1 | 310 | 2200 | 6 | 4 |
| Beispiel 2 | 305 | 2200 | 5,5 | 1 |
| Beispiel 3 | 310 | 2200 | 6 | 0,1 |
| Beispiel 4 | 300 | 2200 | 5 | 0,05 |
| Beispiel 5 | 305 | 2200 | 5,5 | 0,1 |
| Beispiel 6 | 300 | 2200 | 6 | 0,05 |
| Vergleichsbeispiel 1 | 310 | 2200 | 6 | 5,5 |
| Vergleichsbeispiel 2 | 310 | 2200 | 5,5 | 4,5 |

Zusätzlich wurden die Beispiele 2, 5 und 6 sowie das Vergleichsbeispiel 2 bezüglich ihrer Oxidationsaktivität gegenüber C0, Propen und Pentan untersucht. Der betreffende Schadstoff wurde einem Meßgas, bestehend aus 3 Vol.-% O₂, 1 Vol.-% CO₂ und 5 Vol.-% H₂O in Stickstoff, zugemischt. Die Katalysatoren wurden in Form von Splitt der Korngröße 2 bis 4 mm eingesetzt. Gemessen wurde die Temperatur, die für einen 95 %igen Schadstoffumsatz bei einer Raumgeschwindigkeit von 20 000 Nm³/m³ Kat.xh erforderlich war. Die Ergebnisse sind in den Tabellen 3 bis 5 zusammengefaßt.

**Tabelle 3**

| Schadstoff CO (Konzentration 1 Vol.-%) | |
|---|---|
| | Temperatur für 95 %igen CO-Umsatz (°C) |
| Beispiel 2 | 497 (CO-Umsatz: 88 %) |
| Beispiel 5 | 75 |
| Beispiel 6 | 70 |
| Vergleichsbeispiel 2 | 497 (CO-Umsatz: 68 %) |

**Tabelle 4**

| Schadstoff Propen (Konzentration 3000 ppm) | |
|---|---|
| | Temperatur für 95 %igen C₃H₆-Umsatz (°C) |
| Beispiel 2 | 315 |
| Beispiel 5 | 230 |
| Beispiel 6 | 220 |
| Vergleichsbeispiel 2 | 360 |

**Tabelle 5**

| Schadstoff Pentan (Konzentration 2000 ppm) | |
|---|---|
| | Temperatur für 95 %igen C₅H₁₂-Umsatz (°C) |
| Beispiel 2 | 442 |
| Beispiel 5 | 349 |
| Beispiel 6 | 332 |
| Vergleichsbeispiel 2 | 491 |

Aus den in den Tabellen 2 bis 5 zusammengestellten Ergebnissen ist zu ersehen, daß bereits die Katalysatoren der Vergleichsbeispiele 1 und 2 die Fähigkeit zum Abbau organischer Verbindungen besitzen. Durch den Zusatz von BaSO₄ wird diese wesentlich gesteigert, wie die Beispiele 1 und 2 belegen.

Die höchsten Abbauraten organischer Verbindungen werden erzielt, wenn BaSO₄ in Kombination mit einer geringen Menge eines Edelmetalls wie Pt oder Pd im Katalysator auftritt (Beispiele 3 bis 6).

## Patentansprüche

1. Metalloxide enthaltender Katalysator für Verfahren zum oxidativen Abbau von organischen Verbindungen aus Abgasen von Verbrennungsanlagen, enthaltend folgende Komponenten
a) Oxide des Titans und/oder Zirkons
b) Oxide des Vanadiums und/oder Niobs
c) Oxide des Molybdäns, Wolframs und/oder Chroms
d) Sulfate der Erdalkalimetalle Calcium, Strontium oder Barium in einer Menge von 5 bis 40 Gew.-%, bezogen auf das Gesamtgewicht des Katalysators,
wobei zumindest die Komponenten a) und d) in Form eines innigen Gemisches im Katalysator vorliegen.

2. Katalysator nach Anspruch 1, dadurch gekennzeichnet, daß er als zusätzliche Komponente e) Pd, Pt, Ru, Rh, Ir und/oder Os in metallischer oder oxidischer Form in einer Menge von 0,01 bis 3 Gew.-%, bezogen auf das Gesamtgewicht des Katalysators, vorzugsweise als einen auf die Katalysatoroberfläche aufgebrachten überzug, enthält.

3. Katalysator nach Anspruch 1, dadurch gekennzeichnet, daß er
als Komponente a) Titandioxid, insbesondere in der Anatasform,
als Komponente b) Vanadiumoxid, insbesondere als V₂O₅,
als Komponente c) Wolframoxid, insbesondere WO₃,
als Komponente d) Bariumsulfat, und gegebenenfalls
als Komponente e) Platin oder Palladium enthält.

4. Katalysator nach Anspruch 1, dadurch gekennzeichnet, daß er zusätzlich Zink in Form von Oxiden oder Sulfaten enthält.

5. Verfahren zur Herstellung eines Katalysators gemäß Anspruch 1, bei dem die Komponenten a), d) und gegebenenfalls b), c) oder die Ausgangsstoffe für diese Komponenten in an sich bekannter Weise miteinander vermischt werden und aus der Mischung ein Formkörper hergestellt wird, dadurch gekennzeichnet, daß zumindest eine der Komponenten b) und c) in Form eines Sols auf den vorher hergestellten Formkörper aufgebracht wird.

6. Verfahren zur Herstellung eines Katalysators gemäß Anspruch 2, bei dem ein Formkörper mit den Komponenten a), b), c) und d) in an sich bekannter Weise durch Mischen der Komponenten und Formgebung hergestellt wird, wobei gegebenenfalls eine der Komponenten b) und c) in Form eines Sols auf den vorher hergestellten Formkörper aufgebracht wird, dadurch gekennzeichnet, daß der erhaltene Formkörper mit einer Lösung eines Platin- und/oder Palladium-Salzes und/oder mit einem Sol von Platin und/oder Palladium und/oder einer Verbindung der Metalle getränkt wird und der getränkte Formkörper anschließend getrocknet wird.

7. Verfahren zum oxidativen Abbau von organischen Verbindungen aus Abgasen von Verbrennungsanlagen durch Umsetzung mit Sauerstoff in Gegenwart eines Katalysators gemäß den Ansprüchen 1 bis 4.

8. Verfahren nach Anspruch 7, dadurch gekennzeichnet, daß es sich bei den organischen Verbindungen um CO und/oder niedermolekulare Kohlenwasserstoffe handelt.

9. Verfahren nach Anspruch 7, dadurch gekennzeichnet, daß es sich bei den organischen Verbindungen um chlorhaltige Verbindungen, insbesondere um polychlorierte Dibenzofurane und polychlorierte Dibenzodioxine handelt.

10. Verfahren nach den Ansprüchen 7 bis 9, dadurch gekennzeichnet, daß es sich bei den Verbrennungsanlagen um Müllverbrennungsanlagen, Rückstandsverbrennungsanlagen oder Prozeßöfen handelt.

## Claims

1. A catalyst containing metal oxides for a process for the oxidative degradation of organic compounds from waste gases of incineration plants, containing the following components
a) oxides of titanium and/or of zirconium
b) oxides of vanadium and/or of niobium
c) oxides of molybdenum, of tungsten and/or of chromium
d) sulfates of the alkaline earth metals calcium, strontium or barium in an amount of from 5 to 40% by weight, based on the total weight of the catalyst,
at least the components a) and d) being in the form of a thorough mixture in the catalyst.

2. A catalyst as claimed in claim 1, which contains, as an additional component e), Pd, Pt, Ru, Rh, Ir and/or Os in metallic or oxide form in an amount of from 0.01 to 3% by weight, based on the total weight of the catalyst, preferably as a coating applied to the catalyst surface.

3. A catalyst as claimed in claim 1, which contains titanium dioxide, in particular in the anatase form, as component a), vanadium oxide, in particular as V₂O₅, as component b), tungsten oxide, in particular WO₃, as component c), barium sulfate as component d) and, if required, platinum or palladium as component e).

4. A catalyst as claimed in claim 1, which additionally contains zinc in the form of oxides or sulfates.

5. A process for the preparation of a catalyst as claimed in claim 1, in which the components a), d) and, if required, b), c) or the starting materials of these components are mixed with one another in a manner known per se and a molding is produced from this mixture, wherein at least one of the components b) and c) is applied in the form of a sol to the previously produced molding.

6. A process for the preparation of a catalyst as claimed in claim 2, in which a molding containing the components a), b), c) and d) is produced in a manner known per se by mixing the components and shaping, if required one of the components b) and c) being applied in the form of a sol to the previously produced molding, wherein the molding obtained is impregnated with a solution of a platinum and/or palladium salt and/or with a sol of platinum and/or palladium and/or of a compound of the metals, and the impregnated molding is then dried.

7. A process for the oxidative degradation of organic compounds from waste gases of incineration plants by reaction with oxygen in the presence of a catalyst as claimed in any of claims 1 to 4.

8. A process as claimed in claim 7, wherein the organic compounds are CO and/or low molecular weight hydrocarbons.

9. A process as claimed in claim 7, wherein the organic compounds are chlorine-containing compounds, in particular polychlorinated dibenzofurans and polychlorinated dibenzodioxins.

10. A process as claimed in any of claims 7 to 9, wherein the incineration plants are waste incineration plants, residue incineration plants or process furnaces.

## Revendications

1. Catalyseur contenant des oxydes de métaux pour des procédés destinés à la dégradation oxydante de composés organiques à partir de gaz d'échappement ou résiduaires d'installations de combustion, contenant les composants suivants :
a) oxydes du titane et/ou du zirconium,
b) oxydes du vanadium et/ou du niobium,
c) oxydes du molybdène, du tungstène et/ou du chrome,
d) sulfates des métaux alcalino-terreux calcium, strontium ou baryum, en une proportion de 5 à 40% en poids, par rapport au poids total du catalyseur,
où au moins les composants a) et d) se présentent sous la forme d'un mélange intime dans le catalyseur.

2. Catalyseur suivant la revendication 1, caractérisé en ce qu'il contient, à titre de composant e) supplémentaire, du Pd, Pt, Ru, Rh, Ir et/ou Os sous forme métallique ou oxydique en une proportion de 0,01 à 3% en poids, par rapport au poids total du catalyseur, de préférence sous forme d'un revêtement déposé ou appliqué sur la surface du catalyseur.

3. Catalyseur suivant la revendication 1, caractérisé en ce qu'il contient
du dioxyde de titane, plus particulièrement sous la forme anatase, à titre de composant a),
de l'oxyde de vanadium, plus particulièrement sous forme de V₂O₅, à titre de composant b),
de l'oxyde de tungstène, plus spécialement sous la forme WO₃, à titre de composant c),
du sulfate de baryum à titre de composant d) et, éventuellement,
du platine ou du palladium à titre de composant e).

4. Catalyseur suivant la revendication 1, caractérisé en ce qu'il contient complémentairement du zinc sous forme d'oxydes ou de sulfates.

5. Procédé de préparation d'un catalyseur suivant la revendication 1, conformément auquel on mélange mutuellement les composants a), d) et éventuellement b), c) ou les matières de départ pour ces composants, de manière en soi connue et on prépare un corps moulé à partir du mélange, caractérisé en ce qu'au moins l'un des composants b) et c) est appliqué sous la forme d'un sol sur le corps moulé préparé au préalable.

6. Procédé de préparation d'un catalyseur suivant la revendication 2, conformément auquel on prépare un corps moulé à l'aide des composants a), b), c) et d) d'une manière en soi connue par le mélange des composants et moulage, où on applique éventuellement l'un des composants b) et c) sous forme d'un sol sur le corps moulé préparé au préalable, caractérisé en ce que l'on imprègne le corps moulé obtenu d'une solution d'un sel de platine et/ou de palladium et/ou d'un sol de platine et/ou de palladium et/ou d'un composé des métaux et on sèche ensuite le corps moulé imprégné.

7. Procédé pour la dégradation oxydante de composés organiques de gaz résiduaires d'installations de combustion par réaction avec l'oxygène en présence d'un catalyseur suivant l'une quelconque des revendications 1 à 4.

8. Procédé suivant la revendication 7, caractérisé en ce qu'il s'agit, dans le cas des composés organiques, de CO et/ou d'hydrocarbures de faibles poids moléculaires.

9. Procédé suivant la revendication 7, caractérisé en ce qu'il s'agit, dans le cas des composés organiques, de composés contenant du chlore, plus particulièrement de dibenzofurannes polychlorés et dibenzodioxines polychlorées.

10. Procédé suivant l'une quelconque des revendications 7 à 9, caractérisé en ce que, dans le cas des installations de combustion, il s'agit d'installations d'incinération d'ordures, d'installations de combustion de résidus ou de fours industriels.
